# EUROPEAN PATENT SPECIFICATION

(11) **EP 4 044 101 B1**
(45) Date of publication and mention of the grant of the patent: **08.10.2025**
(21) Application number: 20892962.0
(22) Date of filing: 12.08.2020
(51) Int. Cl.: G06Q 50/08, E02F 9/20, G06Q 10/06

(54) **WORK ASSISTANCE SERVER, WORK ASSISTANCE METHOD, AND WORK ASSISTANCE SYSTEM**
ARBEITSASSISTENZSERVER, ARBEITSASSISTENZVERFAHREN UND ARBEITSASSISTENZSYSTEM
SERVEUR D'AIDE AU TRAVAIL, PROCÉDÉ D'AIDE AU TRAVAIL ET SYSTÈME D'AIDE AU TRAVAIL

(30) Priority: 25.11.2019 JP 2019212620
(43) Date of publication of application: 17.08.2022
(73) Proprietor: KOBELCO CONSTRUCTION MACHINERY CO., LTD., Hiroshima-shi, Hiroshima 731-5161 (JP)
(72) Inventor: SAWADA, Yusuke, Hiroshima-shi, Hiroshima 731-5161 (JP); SASAKI, Hitoshi, Hiroshima-shi, Hiroshima 731-5161 (JP); SAIKI, Seiji, Hiroshima-shi, Hiroshima 731-5161 (JP); YAMAZAKI, Yoichiro, Hiroshima-shi, Hiroshima 731-5161 (JP)
(74) Representative: Dr. Schön, Neymeyr & Partner Patentanwälte mbB
(86) International application number: PCT/JP2020/030675
(87) International publication number: WO 2021/106278

(56) References cited:
- EP-A1- 2 757 782
- AU-A1- 2018 299 284
- JP-A- 2005 098 904
- JP-A- 2010 152 834
- JP-A- 2016 095 811
- JP-A- 2019 175 254
- KR-A- 20110 110 648
- US-A1- 2017 255 895
- US-A1- 2018 202 129
- US-A1- 2019 196 464

## Description

### Technical Field

The present invention relates to a work assist server to assist an operator in performing work by use of a work machine, through communication with a client assigned to the operator of the work machine. Such a system is known from document AU 2018 299 284 A1.

### Background Art

There has been proposed a technology of grasping a three-dimensional shape of a construction work site, and accurately informing a construction equipment operator of a relation between a finishing stake and a current status, a travelable range, a dangerous range and the like (see Patent Literature 1, for example). Specifically, distance images obtained from stereo cameras arranged in separate places, respectively, are integrated to generate three-dimensional model data of the construction work site. Then, an image of the construction work site seen from a virtual perspective designated by the operator of the construction equipment is drawn based on the three-dimensional model data and displayed at a driving seat of the construction equipment.

### Citation List

### Patent Literature

Patent Literature 1: Japanese Patent Laid-Open No. 2003-333590

### Summary of Invention

### Technical Problem

However, when an inexperienced operator drives or operates a work machine, it is preferable to smoothly perform work by the operator using the work machine by obtaining advice or instruction from a veteran operator.

To solve the problem, an object of the present invention is to provide a server and a system which enable one operator driving or operating a work machine to intuitively recognize advice or instruction from the other operator.

### Solution to Problem

The present invention relates to a work assist server to assist each of a plurality of operators in performing work by use of a work machine, through communication with each of a plurality of clients which are assigned to the plurality of operators, respectively.

The work assist server of the present invention comprises a first assist processing element and a second assist processing element, wherein the first assist processing element recognizes a route guidance request including a first designated position and a second designated position of a first work machine that is the work machine cooperating with a first client among the plurality of clients, based on communication with the first client, the second assist processing element causes an output interface of a second client among the plurality of clients to output a work environment image of a map showing the first designated position and the second designated position which are included in the route guidance request recognized by the first assist processing element, based on communication with the second client, and recognizes a guided route extending between the first designated position and the second designated position which is designated on the work environment image through an input interface of the second client, and the first assist processing element causes an output interface of the first client to output a route guidance image corresponding to the guided route recognized by the second assist processing element, based on the communication with the first client.

A work assist system of the present invention comprises the work assist server of the present invention, and a client.

According to the work assist server and the work assist system (hereinafter referred to as "the work assist server and the like" as appropriate) of the present invention, in response to the guidance request for the route extending between the first designated position and the second designated position of the first work machine cooperating with the first client (or operated through the communication with the first client), route guidance information corresponding to the guided route extending between the first designated position and the second designated position which is designated through the input interface of the second client is outputted to the output interface of the first client. The first designated position is, for example, a current position of the first work machine or a departure position different from the current position, and the second designated position is, for example, a stop-by position or a destination position of the first work machine. Consequently, for example, an operator driving and operating the first work machine can intuitively recognize advice or instruction to move the first work machine from the first designated position to the second designated position, from another operator to whom the second client is assigned.

### Brief Description of Drawings

FIG. 1 is an explanatory view concerning a configuration of a work assist system as an embodiment of the present invention.
FIG. 2 is an explanatory view concerning a configuration of a remote operation device.
FIG. 3 is an explanatory view concerning a configuration of a work machine.
FIG. 4 is an explanatory view concerning a first function of the work assist system.
FIG. 5 is an explanatory view concerning a second function of the work assist system.
FIG. 6 is an explanatory view concerning a first work environment image.
FIG. 7 is an explanatory view concerning a second work environment image.
FIG. 8 is an explanatory view concerning a method of selecting a second client.
FIG. 9 is an explanatory view concerning a first route guidance image.
FIG. 10 is an explanatory view concerning a second route guidance image.

### Description of Embodiments

### (Configuration of Work Assist System)

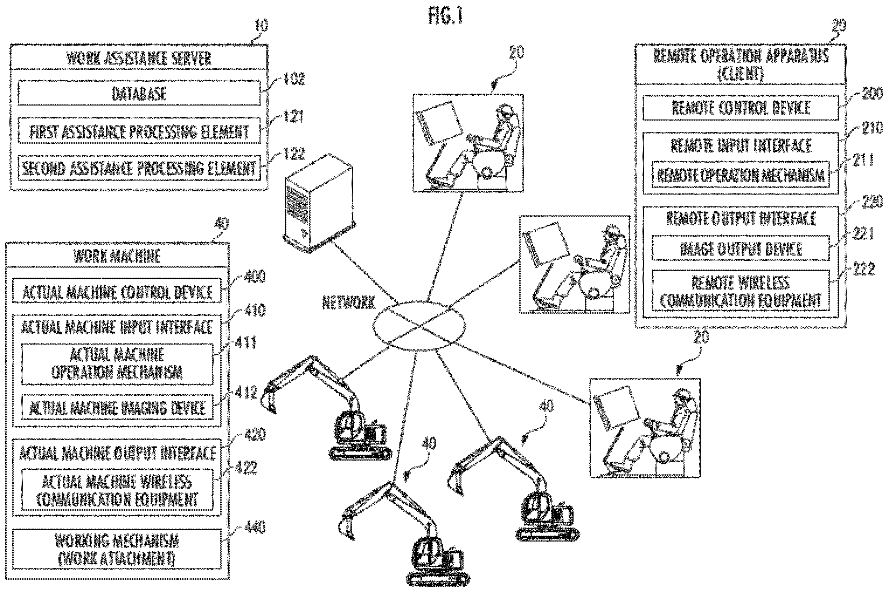

A work assist system as an embodiment of the present invention shown in FIG. 1 includes a work assist server 10, and a plurality of remote operation devices 20 to remotely operate a plurality of work machines 40. The work assist server 10, each remote operation device 20 and each work machine 40 are configured to be mutually network communicable.

### (Configuration of Work Assist Server)

The work assist server 10 comprises a database 102, a first assist processing element 121, and a second assist processing element 122. The database 102 stores and holds a captured image, a work environment image, a route guidance image and the like in addition to a position track of each of the plurality of work machines 40. The database 102 may include a database server separate from the work assist server 10. Each assist processing element includes an arithmetic processing unit (a single core processor or a multi-core processor or a processor core included in the multi-core processor) and reads required data and software from a storage device such as a memory and executes after-mentioned arithmetic processing for the data as a target in accordance with the software.

### (Configuration of Remote Operation Device)

The remote operation device 20 constituting a client comprises a remote control device 200, a remote input interface 210, and a remote output interface 220. The remote control device 200 includes an arithmetic processing unit (a single core processor or a multi-core processor or a processor core included in the multi-core processor) and reads required data and software from a storage device such as a memory and executes arithmetic processing for the data as a target in accordance with the software. The remote input interface 210 comprises a remote operation mechanism 211. The remote output interface 220 comprises an image output device 221 and remote wireless communication equipment 222.

A mobile terminal cooperating or having a mutual communication function with the remote operation device 20 may be included in the client. The mobile terminal may have a communication function with the work assist server 10.

The remote operation mechanism 211 includes an operation device for traveling, an operation device for turning, an operation device for boom, an operation device for arm, and an operation device for bucket. Each operation device includes operation levers receiving a rotating operation. The operation levers (travel levers) for the operation device for traveling are operated to move a lower traveling body 410 of the work machine 40. The travel levers may also serve as travel pedals. For example, the travel pedals fixed to a base portion or a bottom end of the travel levers may be provided. The operation lever (a turn lever) of the operation device for turning is operated to activate a hydraulic swing motor included in a turning mechanism 430 of the work machine 40. The operation lever (a boom lever) of the operation device for boom is operated to move a boom cylinder 442 of the work machine 40. The operation lever (an arm lever) of the operation device for arm is operated to move an arm cylinder 444 of the work machine 40. The operation lever (a bucket lever) of the operation device for bucket is operated to move a bucket cylinder 446 of the work machine 40.

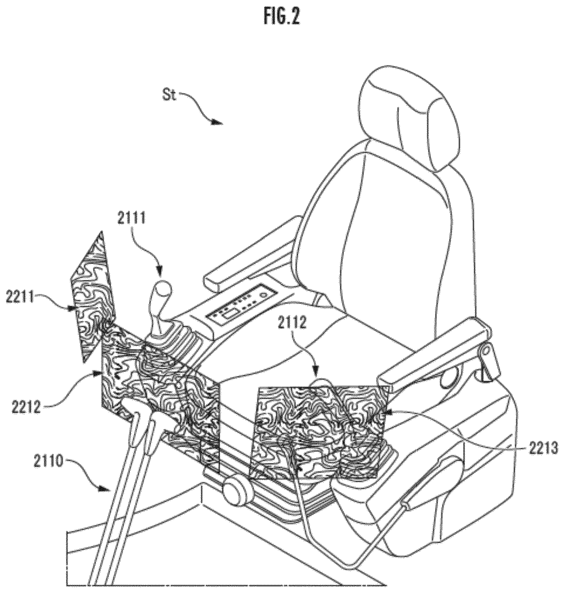

The respective operation levers included in the remote operation mechanism 211 are arranged around a seat St on which an operator sits as shown in FIG. 2, for example. The seat St has such a form as in a high back chair with armrests and may have any form on which a remote operator OP2 can sit, such as a form of a low back chair without a headrest or a form of a chair without a backrest.

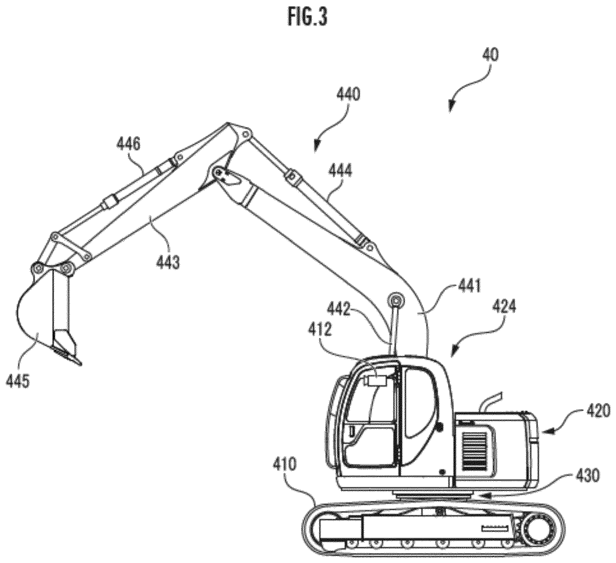

In front of the seat St, a pair of left and right travel levers 2110 corresponding to left and right crawlers are arranged laterally in a left-right direction. One operation lever may serve as a plurality of operation levers. For example, a right-side operation lever 2111 provided in front of a right frame of the seat St shown in FIG. 3 may function as the boom lever when being operated in a front-rear direction and function as the bucket lever when being operated in a left-right direction. Similarly, a left-side operation lever 2112 provided in front of a left frame of the seat St shown in FIG. 2 may function as the arm lever when being operated in the front-rear direction and function as the turn lever when being operated in the left-right direction. A lever pattern may be arbitrarily changed depending on an operator's operation instruction.

For example, as shown in FIG. 2, the image output device 221 includes a diagonally right forward image output device 2211, a front image output device 2212 and a diagonally left forward image output device 2213 arranged diagonally forward to the right of the seat St, in front of the seat, and diagonally forward to the left of the seat, respectively. The image output devices 2211 to 2213 may further comprise a speaker (a voice output device).

### (Configuration of Work Machine)

The work machine 40 comprises an actual machine control device 400, an actual machine input interface 410, an actual machine output interface 420, and an working mechanism 440. The actual machine control device 400 includes an arithmetic processing unit (a single core processor or a multi-core processor or a processor core included in the multi-core processor) and reads required data and software from a storage device such as a memory and executes arithmetic processing for the data as a target in accordance with the software.

The work machine 40 is, for example, a crawler shovel (a construction machine), and comprises the crawler lower traveling body 410, and an upper turning body 420 rotatably mounted on the lower traveling body 410 via the turning mechanism 430 as shown in FIG. 3. In a front left part of the upper turning body 420, a cab (driver's cab) 424 is provided. In a front center part of the upper turning body 420, a work attachment 440 is provided.

The actual machine input interface 410 comprises an actual machine operation mechanism 411 and an actual machine imaging device 412. The actual machine operation mechanism 411 comprises a plurality of operation levers arranged around a seat disposed inside the cab 424 in the same manner as in the remote operation mechanism 211. A drive mechanism or a robot which receives a signal depending on an operation mode of a remote operation lever and moves an actual machine operation lever based on the received signal is provided in the cab 424. The actual machine imaging device 412 is installed, for example, inside the cab 424, and images an environment including at least a part of the working mechanism 440 through a front window of the cab 424.

The actual machine output interface 420 comprises actual machine wireless communication equipment 422.

The work attachment 440 as the working mechanism comprises a boom 441 mounted on the upper turning body 420 such that the boom can be undulated, an arm 443 rotatably coupled to a tip end of the boom 441, and a bucket 445 rotatably coupled to a tip end of the arm 443. The boom cylinder 442, the arm cylinder 444 and the bucket cylinder 446, each of which is configured with a telescopic hydraulic cylinder, are attached to the work attachment 440.

The boom cylinder 442 is interposed between the boom 441 and the upper turning body 420 to receive supply of hydraulic oil and extend and retract, thereby rotating the boom 441 in an undulating direction. The arm cylinder 444 is interposed between the arm 443 and the boom 441 to receive the supply of hydraulic oil and extend and retract, thereby rotating the arm 443 to the boom 441 about a horizontal axis. The bucket cylinder 446 is interposed between the bucket 445 and the arm 443 to receive the supply of hydraulic oil and extend and retract, thereby rotating the bucket 445 to the arm 443 about the horizontal axis.

### (Function)

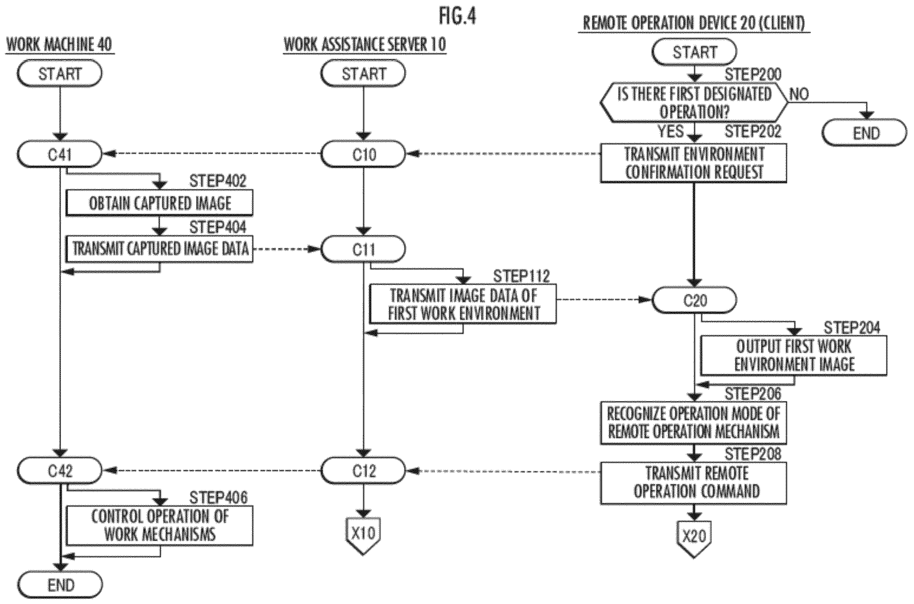

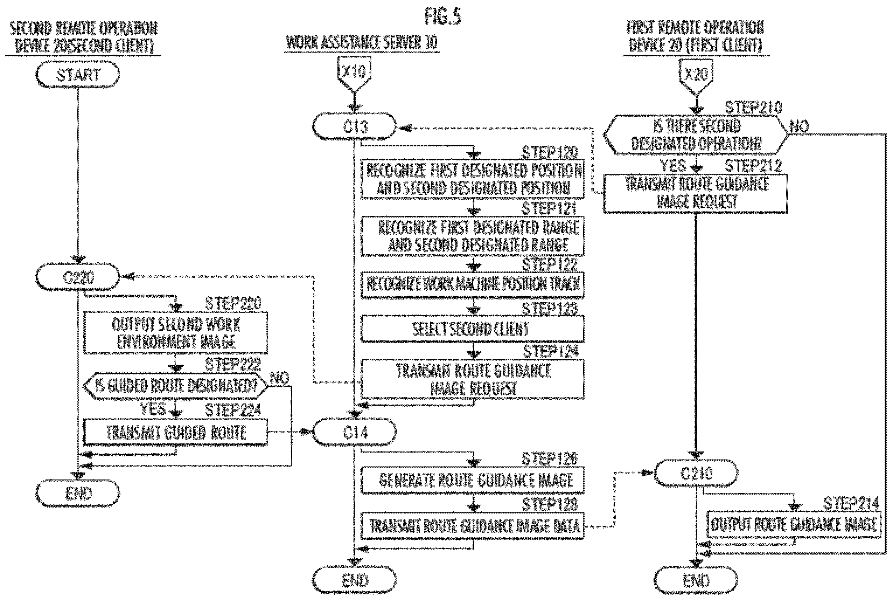

Description will be made as to a function of the work assist system with the above configuration with reference to flowcharts shown in FIG. 4 and 5. In the flowcharts, a block denoted with a reference sign starting with "C" is used for simplicity of description, means data transmission and/or reception and means conditional branch in which processing in a branch direction is executed on conditions of the data transmission and/or reception.

When each constituent element (arithmetic processing resource or hardware resource) of the present invention "recognizes" information, the recognizing is concept including processing to prepare information in any form available for subsequent processing, such as receiving of the information, reading or retrieving of the information from the storage device or the like, writing (storing and holding) or registering of the information in the storage device or the like, presuming, determining, identifying, measuring, predicting or the like of the information by executing arithmetic processing of an output signal from the sensor and/or received or retrieved basic information according to predetermined algorithm, and the like.

### (First Function (Remote Operation of Work Machine))

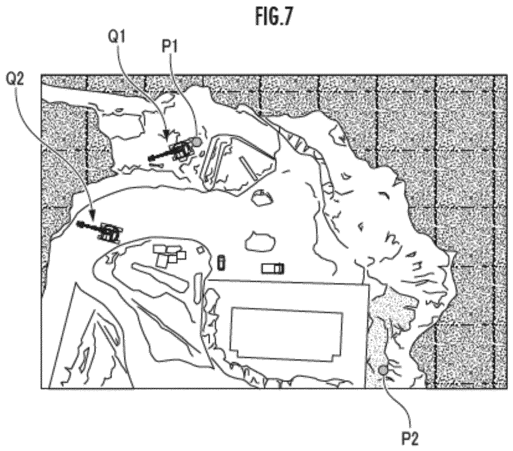

In the remote operation device 20, it is judged whether or not a first designated operation by the operator is present, through the remote input interface 210 (FIG. 4/STEP200). "The first designated operation" is, for example, an operation of tapping an image Q1 or Q2 in the remote input interface 210 to designate the work machine 40 intended to be remotely operated by the operator, for example, in a work environment image (see FIG. 7). In a case where the determination result is negative (NO in FIG. 4/STEP200), a series of processing ends. On the other hand, in a case where the determination result is positive (YES in FIG. 4/STEP200), a request for the work environment image is transmitted to the work assist server 10 through the remote wireless communication equipment 222 (FIG. 4/STEP202). The work environment image request includes at least one of an identifier of the remote operation device 20 and an identifier of the operator.

In the work assist server 10, in a case where the work environment image request is received, the first assist processing element 121 transmits the work environment image request to the corresponding work machine 40 (FIG. 4/C10).

In the work machine 40, in a case where the work environment image request is received through the actual machine wireless communication equipment 422 (FIG. 4/C41), the actual machine control device 400 obtains the captured image through the actual machine imaging device 412 (FIG. 4/STEP402). The actual machine control device 400 transmits captured image data representing the captured image to the work assist server 10 through the actual machine wireless communication equipment 422 (FIG. 4/STEP404).

In the work assist server 10, in a case where the captured image data is received (FIG. 4/C11), first work environment image data depending on the captured image data (all or part of the captured image itself, or data representing a simulated work environment image generated based on the all or part of the captured image) is transmitted to the remote operation device 20 (FIG. 4/STEP112).

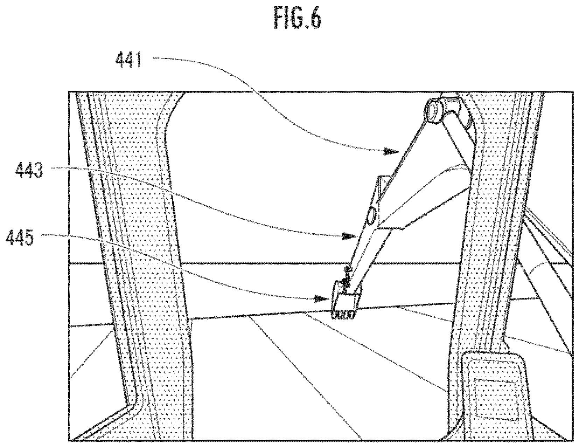

In the remote operation device 20, in a case where the first work environment image data is received through the remote wireless communication equipment 222 (FIG. 4/C20), a first work environment image depending on the first work environment image data is outputted to the image output device 221 (FIG. 4/STEP204). Consequently, for example, as shown in FIG. 6, the work environment image including the boom 441, the arm 443, the bucket 445 and the arm cylinder 444 that are some of the work attachments 440 as the working mechanism is displayed in the image output device 221.

In the remote operation device 20, the remote control device 200 recognizes an operation mode of the remote operation mechanism 211 (FIG. 4/STEP206) and transmits a remote operation command depending on the operation mode to the work assist server 10 through the remote wireless communication equipment 222 (FIG. 4/STEP208).

In the work assist server 10, in a case where the remote operation command is received, the first assist processing element 121 transmits the remote operation command to the work machine 40 (FIG. 4/C12).

In the work machine 40, in a case where the operation command is received through the actual machine wireless communication equipment 422 (FIG. 4/C42), the operation of the work attachment 440 or the like is controlled by the actual machine control device 400 (FIG. 4/STEP406). For example, an operation of scooping soil before the work machine 40 with the bucket 445 and rotating the upper turning body 420 to drop the soil from the bucket 445 is executed.

### (Second Function (Output of Route Guidance Image))

In the first remote operation device 20 as a first client, it is judged whether or not a second designated operation by the operator is present, through the remote input interface 210 (FIG. 5/STEP210). The second designated operation is, for example, a tapping operation through the remote input interface 210 or the operation of the remote operation mechanism 211. In a case where the determination result is positive (YES in FIG. 5./STEP210), a request for the route guidance image is transmitted to the work assist server 10 through the remote wireless communication equipment 222 (FIG. 5/STEP212).

"The route guidance image request" includes data representing latitude and longitude of each of a first designated position P1 and a second designated position P2. The first designated position P1 may be, for example, a departure position designated by the tapping operation or the like in the remote input interface 210 and may be a current position of the work machine 40 cooperating with the first remote operation device 20. The second designated position P2 may be, for example, a stop-by position or a destination position designated by the tapping operation or the like in the remote input interface 210.

In the image output device 221 included in the remote output interface 220, the second work environment image showing a global appearance of a work site may be outputted, and a real space position corresponding to any location in the second work environment image may be designated as the first designated position P1 and/or the second designated position P2. For example, as shown in FIG. 7, the image output device 221 outputs a bird's eye captured image or a bird's eye map showing the global appearance of the work site as the second work environment image. This second work environment image shows images or icons Q1 and Q2 representing the work machines 40 in the work site. Also, the first designated position P1 and the second designated position P2 in the work site are shown.

The bird's eye captured image may be obtained, for example, through an imaging device mounted in an unmanned aerial vehicle or an imaging device placed on a structure such as a pole of the work site. Each of an imaging location and an angle of view of the captured image as the second work environment image may be arbitrarily changed. The bird's eye map may be generated based on the bird's eye captured image.

In the work assist server 10, in a case where the request for the route guidance image is received (FIG. 5/C13), the second assist processing element 122 recognizes at least one of the first designated position P1 and the second designated position P2 (FIG. 5/STEP120).

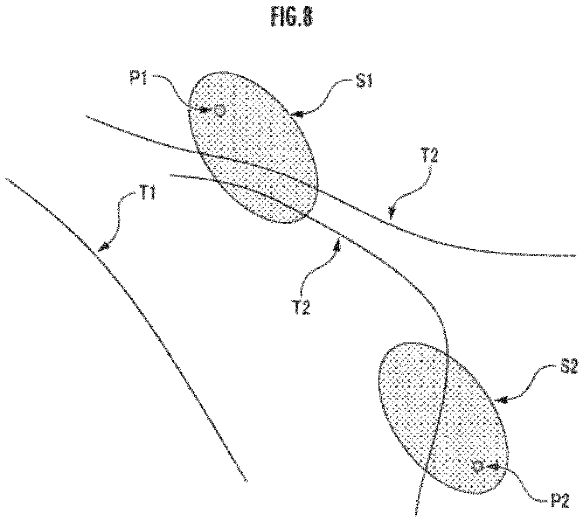

Also, the second assist processing element 122 recognizes a first designated range S1 spreading based on the first designated position P1 and a second designated range S2 spreading based on the second designated position P2 (FIG. 5/STEP121). Consequently, for example, as shown in FIG. 8, the first designated range S1 with a substantially elliptic shape spreading from the second designated position P2 in a deflected manner is set. A straight line including a long axis of this ellipse may include the second designated position P2. Similarly, as shown in FIG. 8, the second designated range S2 with a substantially elliptic shape spreading from the first designated position P1 in a deflected manner is set. A straight line including a long axis of this ellipse may include the first designated position P1. A position, shape and size of each of the first designated range S1 and the second designated range S2 to each reference position may be variously changed. The size of each of the first designated range S1 and the second designated range S2 may vary. The first designated range S1 and the second designated range S2 may be away from each other, in contact with each other, or overlap with each other.

Furthermore, the second assist processing element 122 recognizes, from the database 102, the position track that is a time series of the position of each of a plurality of work machines 40, excluding the work machine 40 cooperating with the first client or being an operation target (FIG. 5/STEP122). Consequently, for example, as shown in FIG. 8, three position tracks T1 to T3 of the work machine 40 are recognized. The position track of the work machine 40 is measured with a GPS mounted in the work machine 40, and with a positioning device as needed in which an acceleration sensor is used. The position track of the work machine 40 measured in the work machine 40 is transmitted together with the identifier of the client or the identifier of the operator to the work assist server 10, directly from the work machine 40 at an appropriate timing or indirectly via the remote operation device 20 (client) cooperating with the work machine 40 and is registered in the database 102.

The second assist processing element 122 selects a second client from a plurality of clients excluding the first client (FIG. 5/STEP123). Specifically, the remote operation device 20 or the client of the operator operating the remote operation device 20 is selected as the second client on requirement that the position track of the work machine 40 in a cooperation period with the remote operation device 20 (client) overlaps with at least one of the first designated range S1 and the second designated range S2.

For example, as shown in FIG. 8, in a case where the position track T2 of the work machine 40 overlaps with the first designated range S1, the remote operation device 20 (client) cooperating with the work machine 40 (second work machine) or the client of the operator of the work machine in a period corresponding to the position track T2 is selected as the second client based on an identifier associated with the position track T2. Also, similarly as shown in FIG. 8, in a case where the position track T3 of the work machine 40 overlaps with the first designated range S1 and the second designated range S2, the remote operation device 20 (client) cooperating with the work machine 40 (second work machine) or the client of the operator of the work machine in a period corresponding to the position track T3 is selected as the second client based on an identifier associated with the position track T3.

In a case where there is not the corresponding client, for example, at least one of the first designated range S1 and the second designated range S2 may be expanded and selection of the second client may be attempted. Alternatively, the client corresponding to the work machine 40 (second work machine) having the position track at the shortest distance to each of the first designated position P1 and the second designated position P2 may be selected as the second client. Furthermore, the client of the operator having a value equal to or more than a reference value of a skill score evaluated according to a total distance at which the work machine 40 is remotely operated to run, a remote operation time of the work machine 40 or the like may be selected as the second client based on the identifier. A client closest to the first client may be selected as the second client.

The second assist processing element 122 transmits the request for the route guidance image to the second remote operation device 20 selected as the second client (FIG. 5/STEP124). In this case, second work environment image data representing the global appearance of the work site is also transmitted to the remote operation device 20.

In the second client (second remote operation device 20), in a case where the route guidance image request is received through the remote wireless communication equipment 222 (FIG. 5/C220), the second work environment image depending on the second work environment image data is outputted to the image output device 221 (FIG. 5/STEP220). Consequently, for example, as shown in FIG. 7, the image output device 221 outputs the bird's eye captured image or the bird's eye map showing the global appearance of the work site, as the second work environment image. The second work environment image shows images or icons Q1 and Q2 representing the work machines 40 in the work site. Also, the first designated position P1 and the second designated position P2 in the work site are shown.

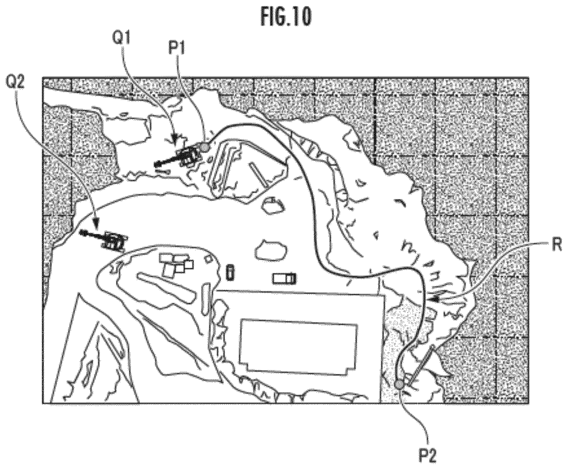

The remote control device 200 determines whether a guided route R extending between the first designated position P1 and the second designated position P2 is designated, through an operation in the remote input interface 210 (FIG. 5/STEP222). For example, in a touch panel that forms both of the remote input interface 210 and the remote output interface 220, an extension mode of the guided route R may be recognized by recognizing an operator's fingertip or pen trajectory. Consequently, for example, as shown in FIG. 10, the operator may designate the curved guided route R extending between the first designated position P1 and the second designated position P2 in the second work environment image.

A start position of the pen trajectory or the like and the first designated position P1 do not have to be the same, and the trajectory may be recognized as the guided route R as long as an interval between both the positions is within a constant interval. A terminal position of the pen trajectory or the like and the second designated position P2 do not have to be the same, and the trajectory may be recognized as the guided route R as long as an interval between both the positions is within a constant interval. Furthermore, in a case where the work machine 40 moves following the pen trajectory or the like, it may be determined by image analysis of the second work environment image whether there is a possibility for the work machine 40 to come into contact with objects such as materials in the work site or a possibility for the work machine 40 to enter a deep depression, and the trajectory may be recognized as the guided route R on requirement that there is not the possibility.

In a case where the determination result is positive (YES in FIG. 5/STEP 222), the remote control device 200 transmits data representing the guided route R through the remote wireless communication equipment 222 included in the remote output interface 220 to the work assist server 10 (FIG. 5/STEP224).

In the work assist server 10, in a case where the data representing the guided route R is received (FIG. 5/C14), the second assist processing element 122 generates the route guidance image based on the guided route R (FIG. 5/STEP126).

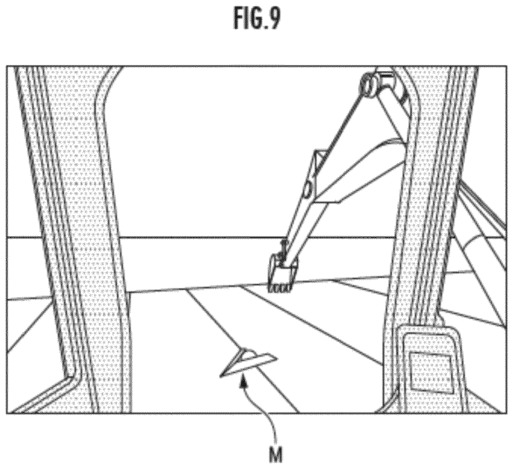

Consequently, for example, as shown in FIG. 9, a direction indication image M indicating a direction of the guided route R may be generated as the route guidance image in the first work environment image (peripheral image) showing a local appearance of the work site around the work machine 40 (first work machine) cooperating with the first client. In this case, a position and posture of a part of the guided route R in a first work environment coordinate system are recognized or calculated by coordinate transformation of a position and posture of a portion of a start end or the like of the guided route R around the work machine 40 in a real space coordinate system (or a second work environment image coordinate system). For the coordinate transformation, a first coordinate transformation factor (matrix or quaternion) representing a position and posture of the work machine 40 in the real space coordinate system, specifically a work machine coordinate system, and a second coordinate transformation factor representing a position and posture of the imaging device 412 in the work machine coordinate system are used. The first coordinate transformation factor is recognized based on the position and posture of the work machine 40 in the second work environment image, or a real space position and real space posture of the work machine 40 which are measured with a positioning sensor and a direction sensor mounted in the work machine 40, respectively. The second coordinate transformation factor is recognized based on a mounting position and posture of the imaging device 412 in the work machine 40 which are stored in a storage device included in the actual machine control device 400 of the work machine 40 or associated with the identifier of the work machine 40 and registered in the database 102.

Also, for example, as shown in FIG. 10, an image indicating an extension mode of the guided route R between the first designated position P1 and the second designated position P2 is generated as the route guidance image in the second work environment image showing the global appearance of the work site.

Furthermore, the second assist processing element 122 transmits data representing the route guidance image to the first client (first remote operation device 20) (FIG. 5/STEP128).

In the first client (first remote operation device 20), in a case where the remote wireless communication equipment 222 included in the remote output interface 220 receives the route guidance image data (FIG. 5/C210), the image output device 221 included in the remote output interface 220 outputs the work environment image (FIG. 5/STEP214). Consequently, the image output device 221 outputs, for example, at least one of the route guidance image based on the first work environment image shown in FIG. 9, and the route guidance image based on the second work environment image shown in FIG. 10.

### (Effects)

According to the work assist system with the above configuration and the work assist server 10 included in the system, the route guidance request from the first work machine 40 cooperating with the first client (first remote operation device 20) is accepted (see FIG. 5/STEP212 to C13). The guided route R extending between the first designated position P1 and the second designated position P2 may be designated through the input interface 210 of the second client (second remote operation device 20) (see FIG. 5/STEP222 and FIG. 10). Then, the route guidance information depending on the guided route R is outputted to the output interface 220 of the first client (see FIG. 5/STEP214, FIG. 9 and 10).

Consequently, for example, the operator driving and operating the work machine 40 by use of the first remote operation device 20 can intuitively recognize advice or instruction to move the first work machine between the first designated position P1 and the second designated position P2, from another operator to whom the second client is assigned.

The second assist processing element 122 recognizes the position track that is the time series of the position of the work machine 40 cooperating with at least one client, based on communication with the at least one client different from the first client (first remote operation device 20) among the plurality of clients, recognizes the at least one client as the second client (second remote operation device 20) on the requirement that the position track is included in at least one of the first designated range S1 spreading based on the first designated position P1 and the second designated range S2 spreading based on the second designated position P2, and permits the designation of the guided route R on the work environment image through the input interface 210 of the second client, based on the communication with the second client (see FIG. 5/STEP121, STEP122, STEP123, STEP124, C220, and then STEP220, and FIG.s 7 and 10).

The operator, to whom the client (remote operation device 20) cooperating with the work machine 40 having the position track included in the first designated range S1 and/or the second designated range S2 or a route movement history is assigned, has a higher probability of having a proper sense of land for designating the guided route R extending between the first designated position P1 and the second designated position P2 as compared with an operator to whom the client is not assigned. This point is taken into consideration, and the client of the operator having the high probability of having the proper sense of land for designating the guided route R extending between the first designated position P1 and the second designated position P2 is recognized as the second client (second remote operation device 20). Consequently, the operator to whom the first client (first remote operation device 20) is assigned can intuitively recognize the advice or instruction from the operator to whom the second client is assigned.

The first assist processing element 121 recognizes the peripheral image representing the appearance around the first work machine 40, based on the communication with the first client (first remote operation device 20) and causes the output interface 220 of the first client to output, as the route guidance image, the direction indication image M indicating the direction of the guided route R in the peripheral image (see FIG. 9).

Consequently, for example, the operator driving and operating the first work machine 40 can intuitively recognize, with the direction indication image M superimposed and displayed on the peripheral image of the first work machine 40, the advice or instruction to move the first work machine 40 from the first designated position P1 to the second designated position P2 from the other operator to whom the second client (second remote operation device 20) is assigned.

The first assist processing element 121 causes the output interface 220 of the first client to output, as the route guidance image, the work environment image showing at least a part of the guided route R (see FIG. 10).

Consequently, for example, the operator driving and operating the first work machine 40 can intuitively recognize, with the work environment image showing at least a part of the guided route R, the advice or instruction to move the first work machine 40 from the first designated position P1 to the second designated position P2, from the other operator to whom the second client (second remote operation device 20) is assigned.

### (Other Embodiments of Present Invention)

In the above embodiment, the work assist server 10 is configured with one or more servers separate from each of the remote operation device 20 and the work machine 40 (see FIG. 1), and as another embodiment, the work assist server 10 may be a constituent element of the remote operation device 20 or the work machine 40. Each of the respective constituent elements 121 and 122 of the work assist server 10 may be a constituent element of each of two or more mutually communicable equipment units in the remote operation device 20 and the work machine 40.

In the above embodiment, the second assist processing element 122 in the work assist server 10 generates the route guidance image based on the data representing the extension mode of the guided route R in the real space coordinate system or the second imaging coordinate system (FIG. 5/STEP126), and as another embodiment, the second assist processing element 122 may transmit the data to the first client, and the remote operation device 20 in the first client may generate the route guidance image based on the data.

### Reference Signs List

- 10: work assist server
- 20: remote operation device (client)
- 40: work machine
- 102: database
- 121: first assist processing element
- 122: second assist processing element
- 210: remote input interface
- 220: remote output interface
- 410: actual machine input interface
- 412: actual machine imaging device
- 420: actual machine output interface
- 440: work attachment (working mechanism)

## Claims

1. A work assist server (10) to assist each of a plurality of operators in performing work by use of a work machine (40), through communication with each of a plurality of clients which each comprise a remote operation device (20) or a mobile terminal cooperating or having mutual communication function with the remote operation device (20) and which are assigned to the plurality of operators, respectively, the work assist server (10) comprises:
a first assist processing element (121); and
a second assist processing element (122), **characterized in that** the first assist processing element (121) is configured to recognize a route guidance request including a first designated position and a second designated position of a first work machine (40) that is the work machine (40) cooperating with a first client among the plurality of clients, based on communication with the first client,
the second assist processing element (122) is configured to cause an output interface (220) of a second client among the plurality of clients to output a work environment image of a map showing the first designated position and the second designated position which are included in the route guidance request recognized by the first assist processing element (121), based on communication with the second client, and is configured to recognize a guided route extending between the first designated position and the second designated position which is designated on the work environment image through an input interface (210) of the second client, and
the first assist processing element (121) is configured to cause an output interface (220) of the first client to output a route guidance image corresponding to the guided route recognized by the second assist processing element (122), based on the communication with the first client.

2. The work assist server (10) according to claim 1, wherein the second assist processing element (122) is configured to recognize a position track that is a time series of a position of a work machine (40) cooperating with at least one client, based on communication with the at least one client different from the first client among the plurality of clients, is configured to recognize the at least one client as the second client on requirement that the position track is included in at least one of a first designated range spreading based on the first designated position and a second designated range spreading based on the second designated position, and is configured to permit designation of the guided route on the work environment image through an input interface (210) of the second client, based on communication with the second client.

3. The work assist server (10) according to claim 1 or 2, wherein the first assist processing element (121) is configured to recognize a peripheral image representing appearance around the first work machine (40), based on communication with the first client, and is configured to cause an output interface (220) of the first client to output a direction indication image indicating a direction of the guided route in the peripheral image as the route guidance image.

4. The work assist server (10) according to any one of claims 1 to 3, wherein the first assist processing element (121) is configured to cause an output interface (220) of the first client to output, as the route guidance image, a work environment image showing at least a part of the guided route.

5. A work assist system comprising:
The work assist server (10) according to any one of claims 1 to 4; and
a client.

6. A work assist method of assisting each of a plurality of operators in performing work by use of a work machine (40), through communication with each of a plurality of clients which each comprise a remote operation device (20) or a mobile terminal cooperating or having mutual communication function with the remote operation device (20) and which are assigned to the plurality of operators, respectively, the work assist method comprising:
a first assist process; and
a second assist process, wherein the first assist process includes a step of recognizing a route guidance request including a first designated position and a second designated position of a first work machine (40) that is the work machine (40) cooperating with a first client among the plurality of clients, based on communication with the first client,
the second assist process includes a step of causing an output interface (220) of a second client among the plurality of clients to output a work environment image of a map showing the first designated position and the second designated position which are included in the route guidance request recognized by the first assist process, based on communication with the second client, and recognizing a guided route extending between the first designated position and the second designated position which is designated on the work environment image through an input interface (210) of the second client, and
the first assist process includes a step of causing an output interface (220) of the first client to output a route guidance image corresponding to the guided route recognized in the second assist process, based on the communication with the first client.

## Patentansprüche

1. Arbeitsunterstützungsserver (10) zur Unterstützung jedes einer Vielzahl von Bedienern bei der Durchführung von Arbeit unter Verwendung einer Arbeitsmaschine (40) durch Kommunikation mit jedem einer Vielzahl von Clients, die jeweils eine Fernbedienungsvorrichtung (20) oder ein mobiles Terminal aufweisen, die bzw. das mit der Fernbedienungsvorrichtung (20) zusammenarbeitet oder eine Funktion einer wechselseitigen Kommunikation damit aufweist, und die jeweils der Vielzahl von Bedienern zugewiesen sind, wobei der Arbeitsunterstützungsserver (10) Folgendes umfasst:
ein erstes unterstützendes Verarbeitungselement (121); und
ein zweites unterstützendes Verarbeitungselement (122),
**dadurch gekennzeichnet, dass**
das erste unterstützende Verarbeitungselement (121) konfiguriert ist, eine Routenführungsaufforderung, die eine erste designierte Position und eine zweite designierte Position einer ersten Arbeitsmaschine (40) umfasst, bei der es sich um die Arbeitsmaschine (40) handelt, die mit einem ersten Client aus der Vielzahl von Clients zusammenarbeitet, basierend auf Kommunikation mit dem ersten Client zu erkennen,
das zweite unterstützende Verarbeitungselement (122) konfiguriert ist, eine Ausgabeschnittstelle (220) eines zweiten Clients aus der Vielzahl von Clients zu veranlassen, basierend auf Kommunikation mit dem zweiten Client ein Arbeitsumgebungsbild einer Karte auszugeben, das die erste designierte Position und die zweite designierte Position zeigt, die in der von dem ersten unterstützenden Verarbeitungselement (121) erkannten Routenführungsaufforderung enthalten sind, und konfiguriert ist, eine zwischen der ersten designierten Position und der zweiten designierten Position verlaufende geführte Route, die auf dem Arbeitsumgebungsbild durch eine Eingabeschnittstelle (210) des zweiten Clients designiert ist, zu erkennen, und
das erste unterstützende Verarbeitungselement (121) konfiguriert ist, eine Ausgabeschnittstelle (220) des ersten Clients zu veranlassen, ein Routenführungsbild, das der von dem zweiten unterstützenden Verarbeitungselement (122) erkannten geführten Route entspricht, basierend auf der Kommunikation mit dem ersten Client auszugeben.

2. Arbeitsunterstützungsserver (10) gemäß Anspruch 1, wobei das zweite unterstützende Verarbeitungselement (122) konfiguriert ist, eine Positionsspur zu erkennen, die eine Zeitreihe einer Position einer Arbeitsmaschine (40) ist, die mit mindestens einem Client zusammenarbeitet, basierend auf Kommunikation mit dem mindestens einem Client, der sich von dem ersten Client aus der Vielzahl von Clients unterscheidet, konfiguriert ist, den mindestens einen Client als den zweiten Client zu erkennen, unter der Bedingung, dass die Positionsspur in mindestens einer einer ersten designierten Bereichsausbreitung basierend auf der ersten designierten Position und einer zweiten designierten Bereichsausbreitung basierend auf der zweiten designierten Position enthalten ist, und konfiguriert ist, basierend auf Kommunikation mit dem zweiten Client die Designation der geführten Route auf dem Arbeitsumgebungsbild über eine Eingabeschnittstelle (210) des zweiten Clients zu ermöglichen.

3. Arbeitsunterstützungsserver (10) gemäß Anspruch 1 oder Anspruch 2, wobei das erste unterstützende Verarbeitungselement (121) konfiguriert ist, auf Grundlage von Kommunikation mit dem ersten Client ein Umgebungsbild zu erkennen, das das Erscheinungsbild rund um die erste Arbeitsmaschine (40) darstellt, und konfiguriert ist, eine Ausgabeschnittstelle (220) des ersten Clients zu veranlassen, ein Richtungsanzeigebild auszugeben, das eine Richtung der geführten Route in dem Umgebungsbild als Routenführungsbild anzeigt.

4. Arbeitsunterstützungsserver (10) gemäß einem der Ansprüche 1 bis 3, wobei das erste unterstützende Verarbeitungselement (121) konfiguriert ist, eine Ausgabeschnittstelle (220) des ersten Clients zu veranlassen, als Routenführungsbild ein Arbeitsumgebungsbild auszugeben, das zumindest einen Teil der geführten Route zeigt.

5. Arbeitsunterstützungssystem, umfassend:
den Arbeitsunterstützungsserver (10) gemäß einem der Ansprüche 1 bis 4 und
einen Client.

6. Arbeitsunterstützungsverfahren zum Unterstützen jedes einer Vielzahl von Bedienern bei der Durchführung von Arbeit unter Verwendung einer Arbeitsmaschine (40) durch Kommunikation mit jedem einer Vielzahl von Clients, die jeweils eine Fernbedienungsvorrichtung (20) oder ein mobiles Terminal aufweisen, die bzw. das mit der Fernbedienungsvorrichtung (20) zusammenarbeitet oder eine Funktion einer wechselseitigen Kommunikation damit aufweist, und die jedem der Vielzahl von Bedienern zugewiesen sind, wobei das Arbeitsunterstützungsverfahren folgende Schritte umfasst:
einen ersten Unterstützungsprozess und
einen zweiten Unterstützungsprozess, wobei
der erste Unterstützungsprozess einen Schritt des Erkennens einer Routenführungsaufforderung, die eine erste designierte Position und eine zweite designierte Position einer ersten Arbeitsmaschine (40) umfasst, bei der es sich um die Arbeitsmaschine (40) handelt, die mit einem ersten Client aus der Vielzahl von Clients zusammenarbeitet, basierend auf Kommunikation mit dem ersten Client umfasst,
der zweite Unterstützungsprozess einen Schritt des Veranlassens einer Ausgabeschnittstelle (220) eines zweiten Clients aus der Vielzahl von Clients, ein Arbeitsumgebungsbild einer Karte auszugeben, das die erste designierte Position und die zweite designierte Position zeigt, die in der Routenführungsaufforderung enthalten sind, die in dem ersten Unterstützungsprozess erkannt wurde, basierend auf Kommunikation mit dem zweiten Client, und einen Schritt des Erkennens einer zwischen der ersten designierten Position und der zweiten designierten Position verlaufenden geführten Route, die über eine Eingabeschnittstelle (210) des zweiten Clients auf dem Arbeitsumgebungsbild designiert ist, umfasst, und
der erste Unterstützungsprozess ferner einen Schritt des Veranlassens einer Ausgabeschnittstelle (220) des ersten Clients, basierend auf Kommunikation mit dem ersten Client ein Routenführungsbild auszugeben, das der in dem zweiten Unterstützungsprozess erkannten geführten Route entspricht, umfasst.

## Revendications

1. Serveur d'aide au travail (10) destiné à aider chacun d'une pluralité d'opérateurs à effectuer un travail au moyen d'une machine de travail (40), par communication avec chacun d'une pluralité de clients comprenant chacun un dispositif de commande à distance (20) ou un terminal mobile coopérant ou communiquant mutuellement avec le dispositif de commande à distance (20) et qui sont respectivement assignés à la pluralité d'opérateurs, le serveur d'aide au travail (10) comprenant :
un premier élément de traitement d'aide (121) ; et
un second élément de traitement d'aide (122),
**caractérisé en ce que**
le premier élément de traitement d'aide (121) est configuré pour reconnaître une demande de guidage d'itinéraire comprenant une première position désignée et une seconde position désignée d'une première machine de travail (40) qui est la machine de travail (40) coopérant avec un premier client parmi la pluralité de clients, sur la base d'une communication avec le premier client,
le second élément de traitement d'aide (122) étant configuré pour amener une interface de sortie (220) d'un second client parmi la pluralité de clients à sortir une image d'environnement de travail d'une carte montrant la première position désignée et la seconde position désignée qui sont incluses dans la demande de guidage d'itinéraire reconnue par le premier élément de traitement d'aide (121), sur la base de la communication avec le second client, et étant configuré pour reconnaître un itinéraire guidé s'étendant entre la première position désignée et la seconde position désignée qui est désignée sur l'image de l'environnement de travail par l'intermédiaire d'une interface d'entrée (210) du second client, et
le premier élément de traitement d'aide (121) étant configuré pour amener une interface de sortie (220) du premier client à émettre une image de guidage d'itinéraire correspondant à l'itinéraire guidé reconnu par le second élément de traitement d'aide (122), sur la base de la communication avec le premier client.

2. Serveur d'aide au travail (10) selon la revendication 1, dans lequel le second élément de traitement d'aide (122) est configuré pour reconnaître un suivi de position qui est une série temporelle d'une position d'une machine de travail (40) coopérant avec au moins un client, sur la base d'une communication avec l'au moins un client différent du premier client parmi la pluralité de clients, est configuré pour reconnaître l'au moins un client comme second client à condition que le suivi de position soit inclus dans au moins une première plage d'étalement désignée basée sur la première position désignée et d'une seconde plage d'étalement désignée basée sur la seconde position désignée, et est configuré pour permettre la désignation de l'itinéraire guidé sur l'image de l'environnement de travail par l'intermédiaire d'une interface d'entrée (210) du second client, sur la base d'une communication avec le second client.

3. Serveur d'aide au travail (10) selon la revendication 1 ou 2, dans lequel le premier élément de traitement d'aide (121) est configuré pour reconnaître une image périphérique représentant une apparence autour de la première machine de travail (40), sur la base de la communication avec le premier client, et est configuré pour amener une interface de sortie (220) du premier client à sortir une image d'indication de direction indiquant une direction de l'itinéraire guidé dans l'image périphérique en tant qu'image de guidage d'itinéraire.

4. Serveur d'aide au travail (10) selon l'une quelconque des revendications 1 à 3, dans lequel le premier élément de traitement d'aide (121) est configuré pour amener une interface de sortie (220) du premier client à sortir, en tant qu'image de guidage d'itinéraire, une image d'environnement de travail montrant au moins une partie de l'itinéraire guidé.

5. Système d'aide au travail comprenant :
le serveur d'aide au travail (10) selon l'une quelconque des revendications 1 à 4 ; et
un client.

6. Procédé d'aide au travail permettant d'aider chacun d'une pluralité d'opérateurs à effectuer un travail au moyen d'une machine de travail (40), par communication avec chacun d'une pluralité de clients comprenant chacun un dispositif de commande à distance (20) ou un terminal mobile coopérant ou ayant une fonction de communication mutuelle avec le dispositif de commande à distance (20) et qui sont respectivement assignés à la pluralité d'opérateurs, le procédé d'aide au travail comprenant :
un premier processus d'aide ; et
un second processus d'aide,
le premier processus d'aide comprenant une étape de reconnaissance d'une demande de guidage d'itinéraire comprenant une première position désignée et une seconde position désignée d'une première machine de travail (40) qui est la machine de travail (40) coopérant avec un premier client parmi la pluralité de clients, sur la base d'une communication avec le premier client,
le second processus d'aide comprenant une étape consistant à amener une interface de sortie (220) d'un second client parmi la pluralité de clients à sortir une image d'environnement de travail d'une carte montrant la première position désignée et la seconde position désignée qui sont incluses dans la demande de guidage d'itinéraire reconnue par le premier processus d'aide, sur la base de la communication avec le second client, et reconnaissant un itinéraire guidé s'étendant entre la première position désignée et la seconde position désignée qui est désigné sur l'image de l'environnement de travail par l'intermédiaire d'une interface d'entrée (210) du second client, et
le premier processus d'aide comprenant une étape consistant à amener une interface de sortie (220) du premier client à sortir une image de guidage d'itinéraire correspondant à l'itinéraire guidé reconnu dans le second processus d'aide, sur la base de la communication avec le premier client.
